# EUROPÄISCHE PATENTANMELDUNG

(11) **EP 1 782 682 A2**
(43) Veröffentlichungstag der Anmeldung: **09.05.2007**
(21) Anmeldenummer: 06022293.2
(22) Anmeldetag: 25.10.2006
(51) Int. Cl.: A01G 3/053

(54) **Handgeführtes Arbeitsgerät**

(30) Priorität: 07.11.2005 DE 102005053420
(71) Anmelder: GARDENA Manufacturing GmbH, 89079 Ulm (DE)
(72) Erfinder: Reichart, Vincent, 89075 Ulm (DE)
(74) Vertreter: Patentanwälte Ruff, Wilhelm, Beier, Dauster & Partner

(57) **Zusammenfassung**

Die Erfindung betrifft ein handgeführtes Arbeitsgerät (1) mit zumindest zwei beabstandet voneinander angeordneten Griffeinrichtungen (2,3) für eine beidhändige Handhabung des Arbeitsgeräts durch einen Bediener, und mit einem Motorgehäuse (4) zur Aufnahme eines Antriebsmotors, an den eine Arbeitseinrichtung (5), insbesondere eine Schneideinrichtung, ankoppelbar ist. Erfindungsgemäß ist vorgesehen, dass die Griffeinrichtungen starr zu einer Griffeinheit (10) verbunden sind und dass das Motorgehäuse verschwenkbar an der Griffeinheit angeordnet ist, um verschiedene Funktionsstellungen des Arbeitsgeräts zu ermöglichen.

## Beschreibung

Die Erfindung betrifft ein handgeführtes Arbeitsgerät, insbesondere eine Heckenschere, mit zumindest zwei beabstandet voneinander angeordneten Griffeinrichtungen für eine beidhändige Handhabung des Arbeitsgeräts durch einen Bediener, und mit einem Motorgehäuse zur Aufnahme eines Antriebsmotors, an den eine Arbeitseinrichtung, insbesondere eine Schneideinrichtung, ankoppelbar ist.

Aus der US 4,785,540 ist eine motorgetriebene Kettensäge bekannt, die für eine beidhändige Führung durch einen Benutzer vorgesehen ist und bei der eine erste, als Bügelgriff ausgeführte Griffeinrichtung um eine Schwenkachse schwenkbar ist, die im Wesentlichen parallel zu einer Längsachse des Schwerts der Kettensäge ausgerichtet ist. Eine zweite, als Pistolengriff ausgeführte Griffeinrichtung ist um eine Schwenkachse schwenkbar, die in einem spitzen Winkel zur Längsachse des Schwerts ausgerichtet ist. Durch die unabhängige Verschwenkbarkeit der Griffeinrichtungen soll eine günstige ergonomische Anpassbarkeit der Kettensäge an unterschiedliche Einsatzbedingungen gewährleistet werden.

Der Erfindung liegt die Aufgabe zugrunde, ein Arbeitsgerät zu schaffen, das eine ergonomische Bedienung unter unterschiedlichen Einsatzbedingungen und eine konstruktiv günstige Aufbauweise verwirklicht.

Diese Aufgabe wird durch ein Arbeitsgerät der eingangs genannten Art gelöst, bei dem die Griffeinrichtungen starr zu einer Griffeinheit verbunden sind und das Motorgehäuse verschwenkbar an der Griffeinheit angeordnet ist, um verschiedene Funktionsstellungen des Arbeitsgeräts zu ermöglichen. Durch eine starre Verbindung der Griffeinrichtungen zu einer Griffeinheit wird sichergestellt, dass die Griffeinrichtungen immer optimal zueinander ausgerichtet sind. Dadurch können die Griffeinrichtungen gezielt auf eine besonders günstige Stellung der Hände des Benutzers gestaltet werden, wodurch sich eine vorteilhafte Ergonomie für die Griffeinheit und somit für das Arbeitsgerät erzielen lässt. Trotz der starren Kopplung der zumindest zwei voneinander beabstandeten Griffeinrichtungen muss eine Anpassung des Arbeitsgeräts an unterschiedliche Einsatzbedingungen möglich sein. Unterschiedliche Einsatz- oder Benutzungsbedingungen liegen beispielsweise bei einem als Heckenschere ausgeführten Arbeitsgerät vor, wenn die Seitenflächen einer Hecke geschnitten werden sollen oder eine Oberseite der Hecken gestutzt werden soll. Bei einem als Kettensäge ausgeführten Arbeitsgerät können unterschiedliche Einsatzbedingungen auftreten, wenn Bäume gefällt werden sollen oder wenn bereits gefällte Bäume entastet werden müssen. Für derartig unterschiedliche Einsatzbedingungen ist das Motorgehäuse verschwenkbar an der Griffeinheit angeordnet, so dass eine Anpassung an die unterschiedlichen Einsatzbedingungen durch eine Schwenkbewegung zwischen Griffeinheit und Motorgehäuse vorgenommen werden kann. Durch eine Verschwenkung des Motorgehäuses und der damit gekoppelten Arbeitseinrichtung wird bei gleichbleibender Stellung der Griffeinrichtungen die Ausrichtung der Arbeitseinrichtung bezogen auf den Benutzer, der das Arbeitsgerät mit beiden Händen ergreift,
verändert. Damit kann die gewünschte Anpassung auf unterschiedliche Einsatzbedingungen vorgenommen werden.

In Ausgestaltung der Erfindung ist vorgesehen, dass das Motorgehäuse relativ zur Griffeinheit um eine Schwenkachse bewegbar ist, die zumindest im Wesentlichen parallel zu einer Längsachse der Arbeitseinrichtung ausgerichtet ist. Damit kann eine Anpassung des Arbeitsgeräts auf unterschiedliche Einsatzbedingungen in einfacher Weise erfolgen. Die Arbeitseinrichtung, die bei einer Heckenschere als schlankes, langgestrecktes Messerblatt und bei einer Kettensäge als flaches, im Wesentlichen oval geformtes Kettenschwert ausgeführt ist, weist eine Längsachse auf, die sich in einer Hauptausdehnungsrichtung der jeweiligen Arbeitseinrichtung erstreckt. Die Verschwenkung des Motorgehäuses um die parallel zur Längsachse der Arbeitseinrichtung angeordnete Schwenkachse ermöglicht beispielsweise bei einer Heckenschere beim Beschneiden eines im Wesentlichen vertikalen Bereichs der Hecke eine Ausrichtung des Messerblatts derart, dass eine Schneidebene des Messerblatts orthogonal zu den Armen des Benutzers ausgerichtet ist. Beim Kappen einer Oberseite der Hecke kann abhängig von der Höhe der Hecke eine orthogonale oder parallele Ausrichtung der Schneidebene des Messerblatts zu den Armen des Benutzers gewählt werden. Somit lässt sich durch die Verschwenkung des Motorgehäuses um die parallel zur Längserstreckung der Arbeitseinrichtung ausgerichtete Schwenkachse eine ergonomische Anpassung des Arbeitsgeräts an die unterschiedlichen Einsatzbedingungen erzielen.

In weiterer Ausgestaltung der Erfindung ist vorgesehen, dass eine Griffachse oder Griffebene einer ersten Griffeinrichtung zumindest im Wesentlichen orthogonal zu einer Griffachse oder Griffebene einer zweiten Griffeinrichtung ausgerichtet ist. Damit kann eine ergonomisch günstige Kraftübertragung vom Benutzer auf das Arbeitsgerät verwirklicht werden. Der Benutzer ergreift die erste Griffeinrichtung des Arbeitsgeräts mit der einen Hand, während mit der zweiten Hand die zweite Griffeinrichtung ergriffen wird, die durch die Griffgestaltung orthogonal zur ersten Hand ausgerichtet ist. Damit können nicht nur Kräfte sondern auch Drehmomente in günstiger Weise vom Benutzer auf das Arbeitsgerät übertragen werden, wobei die Einleitung von Drehmomenten in zwei durch die Lage der Griffachsen bestimmten Hauptrichtungen besonders günstig erfolgen kann. Dabei dient jeweils die Griffachse der einen Griffeinrichtung als Drehachse, während an der anderen Griffeinrichtung die Kraft zur Erzeugung des Drehmoments eingeleitet wird. Dadurch ist eine gute Manövrierbarkeit des Arbeitsgeräts gewährleistet.

In weiterer Ausgestaltung der Erfindung ist vorgesehen, dass zumindest eine Griffeinrichtung als zumindest im Wesentlichen geschlossener Bügelgriff ausgeführt ist. Ein Bügelgriff ist besonders geeignet, wenn ein Einsatz des Arbeitsgeräts unter ständig variierenden Einsatzbedingungen stattfindet, so dass eine Verschwenkung des Motorgehäuses gegenüber der Griffeinrichtung zur optimalen Anpassung aus Zeitgründen ausgeschlossen ist. Der Bügelgriff, der insbesondere eine im Wesentlichen kreisringabschnittsförmige oder U-förmige Geometrie aufweisen kann, ermöglicht einen Wechsel der Griffposition durch Umgreifen mit der betreffenden Hand und erlaubt damit zumindest in einem gewissen Winkelbereich eine Anpassung der Greifstellung der Hände des Benutzers gegenüber dem Arbeitsgerät.

In weiterer Ausgestaltung der Erfindung ist vorgesehen, dass zumindest eine Griffeinrichtung als Pistolengriff ausgeführt ist. Ein Pistolengriff ist besonders geeignet, wenn neben der Greiffunktion auch eine Bedienfunktion in der Griffeinrichtung verwirklicht werden soll. Als Bedienfunktion kommt beispielsweise die Betätigung eines Geräteschalters oder einer mit dem Geräteschalter gekoppelten Sicherheitstaste in Frage. Gerade komplexere Bedienfunktionen wie die eines proportional zum Betätigungsweg wirkenden Geräteschalters zur Drehzahlbeeinflussung des Antriebsmotors lassen zur Betätigung nur eine geringe Variation der Griffposition der Hand des Bedieners an der Griffeinrichtung zu, ansonsten treten unergonomische Handstellungen auf. Ein Pistolengriff kann insbesondere als frei vom Arbeitsgerät abragender, im Wesentlichen stabförmiger Fortsatz verwirklicht werden, bei dem insbesondere zumindest eine in orthogonaler Richtung zur Griffachse zu betätigende Betätigungstaste vorgesehen ist.

In weiterer Ausgestaltung der Erfindung ist vorgesehen, dass zumindest einer Griffeinrichtung eine Betätigungseinrichtung zugeordnet ist. Mit der Betätigungseinrichtung kann eine Beeinflussung des Antriebsmotors vorgenommen werden. Die Betätigungseinrichtung kann insbesondere als Geräteschalter ausgeführt sein, der für ein Ein- und Ausschalten und gegebenenfalls für eine Steuerung oder Regelung einer Energieversorgung des Antriebsmotors vorgesehen ist. Durch eine Integration der Betätigungseinrichtung in die Griffeinrichtung kann ein sicherer und ergonomischer Betrieb des Arbeitsgeräts gewährleistet werden. Als Betätigungseinrichtung kommt insbesondere eine Drucktaste in Frage, die zur mechanischen Ansteuerung einer elektrischen oder elektronischen Schalteinrichtung für einen elektrisch betreibbaren Antriebsmotor oder mit einem Gaszug eines Vergasers eines Verbrennungsmotors verbunden sein kann. Bei einer Vielzahl von Arbeitsgeräten wie Heckenscheren oder Kettensägen ist zur Einhaltung von Sicherheitsvorschriften eine beidhändige Bedienung vorzusehen, die dadurch verwirklicht wird, dass beiden Griffeinrichtungen jeweils zumindest eine Betätigungseinrichtung zugeordnet ist. Dabei ist eine erste Betätigungseinrichtung als Geräteschalter ausgeführt, während eine zweite Betätigungseinrichtung als Sperrtaste ausgebildet sein kann, die eine Betätigung erfordert, um die erste Betätigungseinrichtung freizugeben und das Arbeitsgerät in Betrieb nehmen zu können.

In weiterer Ausgestaltung der Erfindung ist vorgesehen, dass an zumindest einer Griffeinrichtung ein Schutzschild, das insbesondere mit einer Betätigungseinrichtung koppelbar ist, angebracht ist. Ein Schutzschild kann vorgesehen sein, um eine oder beide Hände des Benutzers, mit denen die Griffeinrichtungen ergriffen werden, beispielsweise vor Verletzungen durch Schneidspäne, wie sie beim Betrieb des Arbeitsgeräts auftreten können, zu schützen. Zudem kann ein Schutzschild auch dazu vorgesehen sein, bei einer schnellen Relativbewegung des Arbeitsgeräts, wie sie als Rückschlag beispielsweise beim Abrutschen eines Messerblatts einer Heckenschere oder bei einem Verklemmen der Kette einer Kettensäge auftreten kann, eine Schnellbremsung der Arbeitseinrichtung herbeizuführen, um eine Verletzungsgefahr durch die Arbeitseinrichtung zu vermindern. Das Schutzschild kann zu diesem Zweck derart an der Griffeinrichtung angebracht sein, dass die Relativbewegung zu einem Anstoßen der Hand des Bedieners am Schutzschild führt, so dass dieses aus einer Ruhestellung in eine Funktionsstellung ausgelenkt wird, wodurch die gewünschte Schnellbremsung ausgelöst wird. Durch die starre Kopplung der Griffeinrichtungen kann ein derartiges Schutzschild besonders vorteilhaft mit einer im Motorgehäuse vorgesehenen, dem Antriebsmotor und/oder der Arbeitseinrichtung zugeordneten Bremseinrichtung gekoppelt werden. Zudem ist durch die starre Kopplung der Griffeinrichtungen ein Mitschwenken des Schutzschilds trotz der Ansteuerung der Bremseinrichtung mit einem vertretbaren konstruktiven Aufwand zu verwirklichen.

In weiterer Ausgestaltung der Erfindung ist eine Arretierungsvorrichtung vorgesehen, die eine Verriegelung des Motorgehäuses an der Griffeinheit in zumindest einer Funktionsstellung ermöglicht. Durch die Arretierungsvorrichtung ist sichergestellt, dass im Betrieb des Arbeitsgeräts keine unerwünschte Relativbewegung, insbesondere keine Schwenkbewegung, zwischen Griffeinheit und Motorgehäuse stattfindet. Die Arretierungsvorrichtung kann insbesondere als Drucktaste, als Knebelschraube oder als Zughebel ausgeführt werden und eine kraftschlüssige und/oder formschlüssige Arretierung des Motorgehäuses gegenüber der Griffeinheit gewährleisten. Die Arretierungsvorrichtung kann für eine stufenlose Arretierung des Motorgehäuses oder für eine Arretierung in vorgebbaren Winkelschritten vorgesehen sein. Bei einer bevorzugten Ausführungsform der Erfindung sind zumindest zwei miteinander gekoppelte Arretierungsvorrichtungen vorgesehen, die derart eingerichtet sind, dass eine Verschwenkung des Motorgehäuses gegenüber der Griffeinheit nur bei gleichzeitiger Betätigung beider Arretierungsvorrichtungen möglich ist. Damit kann verhindert werden, dass beim Betrieb des Arbeitsgeräts ein ungewollter Schwenkvorgang des Motorgehäuses relativ zur Griffeinheit, der eine erhebliche Verletzungsgefahr bedeuten würde, auftritt.

In weiterer Ausgestaltung der Erfindung ist vorgesehen, dass die Griffeinheit einen insbesondere zwischen den Griffeinrichtungen angeordneten, im Wesentlichen zylindrisch gestalteten Abschnitt aufweist und das Motorgehäuse um eine Zylinderachse des zylindrischen Abschnitts verschwenkbar ist. Der zylindrische Abschnitt erlaubt eine konstruktiv vorteilhafte Gestaltung der schwenkbaren Verbindung zwischen der Griffeinheit und dem Motorgehäuse. Dabei dient der zur starren Kopplung der Griffeinrichtungen vorgesehene zylindrische Abschnitt als Drehachse, auf der eine dem Motorgehäuse zugeordnete buchsenartige Innenfläche gleiten kann, um die Verschwenkbarkeit zu gewährleisten. Das Motorgehäuse kann insbesondere aus zwei im Wesentlichen spiegelsymmetrisch geformten Halbschalen aufgebaut sein, die gemeinsam den zylindrischen Abschnitt umfassen. Bei einer bevorzugten Ausführungsform der Erfindung ist der zylindrische Abschnitt zumindest bereichsweise mit einer Verzahnung versehen, die für einen Eingriff einer der Arretierungsvorrichtung zugeordneten Drucktaste vorgesehen ist und die eine formschlüssige Arretierung des Motorgehäuses an der Griffeinheit ermöglicht.

In weiterer Ausgestaltung der Erfindung ist vorgesehen, dass eine der Arbeitseinrichtung abgewandte Griffeinrichtung als Pistolengriff ausgeführt ist und die Griffachse des Pistolengriffs die Schwenkachse in einem spitzen Winkel schneidet. Damit kann eine ergonomische Griffgestaltung verwirklicht werden, da der Pistolengriff eine günstige Einleitung eines Drehmoments um eine orthogonal zu einer Längsachse der Arbeitseinrichtung ausgerichtete Drehachse ermöglicht und typischweise mit einer Betätigungseinrichtung versehen ist, die eine Beeinflussung des Antriebsmotors ermöglicht. Eine Ausrichtung der Griffachse derart, dass die Schwenkachse in einem spitzen Winkel geschnitten wird, ist im Hinblick auf das typischerweise mit angewinkelten Armen zu führende Arbeitsgerät besonders vorteilhaft, da ansonsten eine unangenehm starke Abwinklung des Handgelenks zum Ergreifen des Pistolengriffs notwendig ist.

In weiterer Ausgestaltung der Erfindung ist vorgesehen, dass zumindest ein Griffabschnitt einer Griffeinrichtung um eine von der Schwenkachse abweichende Bewegungsachse schwenkbar an der Griffeinheit angebracht ist. Damit kann vom Benutzer eine individuelle Einstellung der jeweiligen Griffeinrichtung vorgenommen werden. Beispielsweise kann eine Schwenkstellung des Bügelgriffs verändert werden, um eine Anpassung an unterschiedliche Einsatzbedingungen vorzunehmen. Ergänzend oder alternativ kann ein der Griffeinheit zugeordneter Pistolengriff verschwenkt werden, um eine ergonomische Bedienung der Betätigungseinrichtung unter verschiedenen Einsatzbedingungen zu gewährleisten.

In weiterer Ausgestaltung der Erfindung ist vorgesehen, dass zumindest eine Übertragungseinrichtung für eine Übertragung einer rotatorischen und/oder translatorischen Steuerungsbewegung längs der Schwenkachse zur Kopplung zumindest einer Betätigungseinrichtung mit zumindest einer dem Antriebsmotor und/oder der Arbeitseinrichtung zugeordneten Funktionseinrichtung vorgesehen ist. Durch eine derartige Anordnung einer Übertragungseinrichtung ist eine Übertragung von Steuerungsbewegungen unabhängig von der Winkelstellung des Motorgehäuses gegenüber der Griffeinheit möglich. Als Steuerungsbewegungen können beispielsweise die Bewegungen einer Betätigungseinrichtung, beispielsweise eines Gashebels für die Ansteuerung des Vergasers eines Verbrennungsmotors oder eines Druckschalters zur mechanischen Ansteuerung einer Drehzahlsteuerung oder Drehzahlregelung für einen Elektromotor übertragen werden. Die Übertragung der Steuerungsbewegung kann insbesondere als Linearbewegung längs der Schwenkachse oder als Rotationsbewegung um die Schwenkachse erfolgen. Für die Übertragung einer Linearbewegung kann eine konzentrisch zur Schwenkachse angeordnete Nutenscheibe vorgesehen sein, die längs der Schwenkachse verschiebbar ist und die auf eine am Motorgehäuse angebrachte, mit einem Nocken in die Nutenscheibe eingreifende Stelleinrichtung wirkt. Durch die Verschwenkung des Motorgehäuses um die Griffeinrichtung verändert sich zwar die Position des Nockens am Umfang der Nutenscheibe, die Schwenkbewegung wird jedoch nicht blockiert und eine Übertragung einer Translationsbewegung kann unabhängig vom Schwenkwinkel erfolgen. Bei geeigneter Gestaltung der Übertragungseinrichtung kann eine Übertragung von Steuerungsbewegungen unabhängig vom Drehwinkel des Motorgehäuses gegenüber der Griffeinheit verwirklicht werden, auch wenn das Motorgehäuse um mehr als 360 Grad gegenüber der Griffeinheit verschwenkt wird.

Weitere Vorteile und Merkmale ergeben sich aus den Ansprüchen sowie der nachfolgenden Beschreibung eines bevorzugten Ausführungsbeispiels der Erfindung, das anhand der Zeichnungen dargestellt ist. Dabei zeigt:

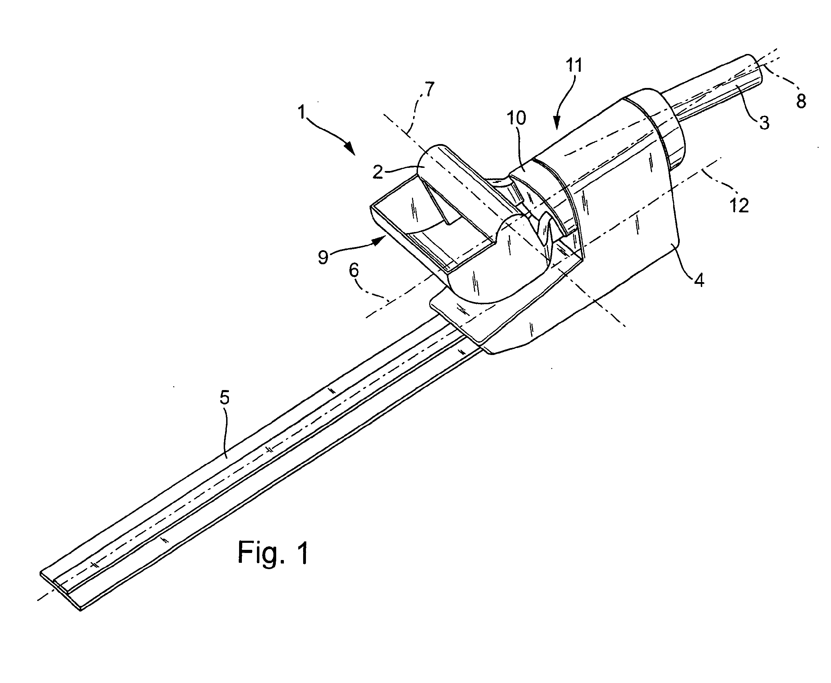

- Fig. 1: in perspektivischer Darstellung ein als Heckenschere ausgeführtes Arbeitsgerät mit einer Griffeinheit und einem verschwenkbaren Motorgehäuse,
- Fig. 2: eine Seitenansicht des Arbeitsgeräts gemäß der Fig. 1.

Ein als Heckenschere ausgeführtes Arbeitsgerät 1 weist zwei Griffeinrichtungen 2, 3 auf, die starr zu einer Griffeinheit 10 zusammengefasst sind. An der Griffeinheit 10 ist ein Motorgehäuse 4 angebracht, das für die Aufnahme eines nicht dargestellten Antriebsmotors vorgesehen ist und an dem eine als Messerblatt der Heckenschere ausgeführte Arbeitseinrichtung 5 angebracht ist. Das Motorgehäuse 4 ist an der Griffeinheit 10 um eine Schwenkachse 6 verschwenkbar gelagert, die parallel zu einer Längsachse 12 der Arbeitseinrichtung 5 ausgerichtet ist.

Die starre Kopplung der Griffeinrichtungen 2, 3 ist mittels eines im Wesentlichen zylindrisch ausgeführten, nicht näher dargestellten Verbindungsbereichs 11 verwirklicht, der in einer Doppelfunktion auch als Lagerbolzen für zwei jeweils halbzylindrisch geformte, in Halbschalen des Motorgehäuses 4 vorgesehene, nicht dargestellte Lagerflächen dient, um eine Verschwenkbarkeit des Motorgehäuses 4 gegenüber der Griffeinheit 10 zu ermöglichen. Die Schwenkachse 6 der Schwenkbewegung des Motorgehäuses entspricht einer Mittellängsachse des zylindrischen Verbindungsbereichs 11.

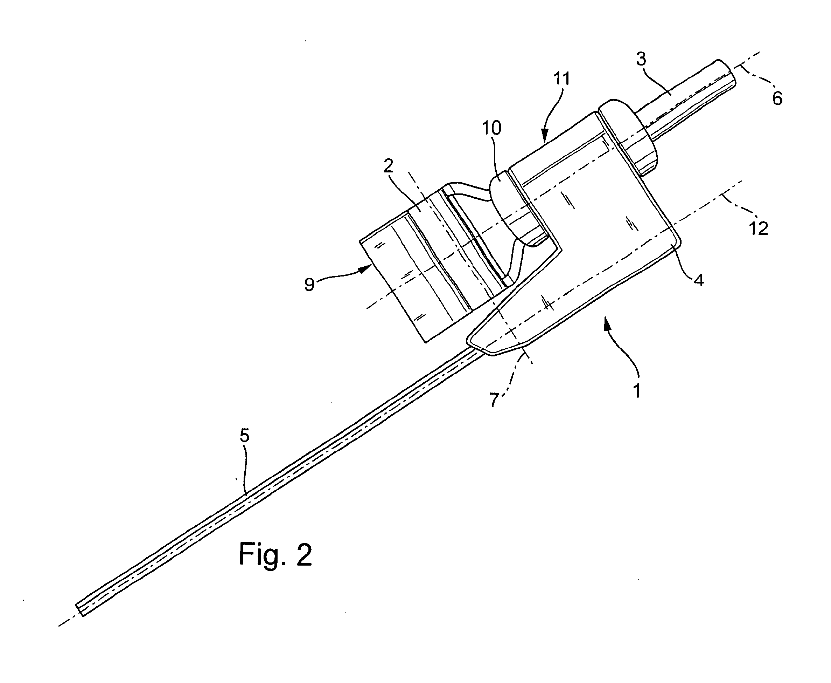

Das Motorgehäuse 4 ist, wie in Fig. 2 näher dargestellt, im Wesentlichen L-förmig gestaltet, wobei ein erster Gehäuseabschnitt als Lageraufnahme für den zylindrischen Verbindungsbereich 11 vorgesehen ist, während ein zweiter Gehäuseabschnitt für die Aufnahme des nicht dargestellten Antriebsmotors und eines zwischen Antriebsmotor und Arbeitseinrichtung vorgesehenen, ebenfalls nicht dargestellten Getriebes gestaltet ist.

Die schematisch dargestellte, als Bügelgriff vorgesehene erste Griffeinrichtung 2 weist eine orthogonal zur Schwenkachse 6 ausgerichtete Griffachse 7 auf. Die Griffeinrichtung 2 ist mit einem einstückig angeformten Schutzschild 9 versehen, das als Handschutz gegen Schneidspänen, die beim Betrieb des Arbeitsgeräts 1 entstehen können, vorgesehen ist. Das Schutzschild 9 ist schaufelartig ausgeführt, bietet einen Schutz für die Finger des Benutzers und erlaubt ein komfortables Ergreifen der Griffeinrichtung 2.

Die Griffachse 7 der Griffeinrichtung 2 ist in orthogonaler Richtung gegenüber der Schwenkachse 6 und gegenüber einem nicht dargestellten Schwerpunkt des Arbeitsgeräts 1 versetzt angeordnet. Der Schwerpunkt ist im Wesentlichen durch die Anordnung des Antriebsmotors und der Arbeitseinrichtung bestimmt und ist im Motorgehäuse ungefähr im Bereich der Längsachse 12 der Arbeitseinrichtung angesiedelt. Durch diese Anordnung der Griffachse 7 pendelt sich das Arbeitsgerät 1 bei einem Ergreifen an der Griffeinrichtung 2 ungefähr waagerecht aus, da der Schwerpunkt ungefähr in vertikaler Richtung unterhalb der Griffeinrichtung 2 angeordnet ist. Damit kann eine ermüdungsarme Benutzung des Arbeitsgeräts 1 sichergestellt werden, da die Griffachse 7 als Schwenkachse für das Arbeitsgerät 1 dient und lediglich ein Drehmoment eingeleitet werden muss, wenn das Arbeitsgerät 1 aus der waagerechten, horizontalen Ausrichtung ausgelenkt werden soll.

An der Griffeinrichtung 2 ist eine nicht dargestellte Betätigungseinrichtung vorgesehen, die als Riegeltaste für einen an der Griffeinrichtung 3 angebrachten, ebenfalls nicht dargestellten Motorschalter vorgesehen ist. Der Motorschalter kann nur dann für die Inbetriebnahme des Arbeitsgeräts 1 betätigt werden, wenn die Riegeltaste an der Griffeinrichtung 2 gedrückt ist. Damit wird durch die konstruktive Gestaltung des Arbeitsgeräts 1 eine Zweihandbedienung durch den Benutzer erzwungen, wodurch ein Verletzungsrisiko gesenkt werden kann.

Die Griffeinrichtung 3 ist als Pistolengriff ausgeführt, wobei eine Griffachse 8 die Schwenkachse 6 in einem spitzen Winkel schneidet. Durch diese Anordnung der Griffeinrichtung 3 gegenüber der Griffeinrichtung 2 und dem Motorgehäuse 4 ist eine ergonomische Handhaltung für die typischen Einsatzfälle des Arbeitsgeräts 1 vorgegeben. Der Motorschalter an der Griffeinrichtung 3 kann als Proportionalschalter ausgeführt sein, bei dem ein Betätigungsweg proportional einer Drehzahl des Antriebsmotors entspricht. Der Pistolengriff kann mit einem nicht dargestellten Gelenk versehen sein, das eine Verschwenkung eines Griffabschnitts um eine Gelenkachse ermöglicht, die orthogonal zur Schwenkachse 6 ausgerichtet ist, um eine individuelle Anpassung an die Bedürfnisse des Benutzers zu ermöglichen.

Zwischen Griffeinheit 10 und Motorgehäuse 4 können Anschläge für eine Winkelbegrenzung der Schwenkbewegung vorgesehen sein, damit Schwenkstellungen des Motorgehäuses 4 gegenüber der Griffeinheit 10 ausgeschlossen sind, bei denen eine Gefährdung des Benutzers auftreten kann. Die Winkelbegrenzung kann insbesondere für einen maximalen Schwenkwinkel von 180 Grad vorgesehen sein.

Durch die starre Kopplung der beiden Griffeinrichtungen 2, 3 kann eine ergonomisch vorteilhafte Ausrichtung der Griffachsen 7, 8 zueinander gewährleistet werden, die auch bei einer Anpassung des Arbeitsgeräts 1 auf verschiedene Einsatzbedingungen nicht verändert wird. Durch die starre Kopplung der Griffeinrichtungen 2, 3 kann in vorteilhafter Weise die zur Erfüllung von Sicherheitsvorschriften notwendige Kopplung von den Griffeinrichtungen 2, 3 zugeordneten Betätigungseinrichtungen für eine 2-Hand-Bedienung verwirklicht werden. Die Schwenkachse 6 kann dazu als Übertragungsachse für die dazu notwendigen Stellbewegungen zwischen den Griffeinrichtungen 2, 3 dienen. Zudem kann die Schwenkachse 6 als Symmetrieachse für die Übertragung von translatorischen und/oder rotatorischen Steuerbewegungen zwischen den Betätigungseinrichtungen und der Ansteuerung des Antriebsmotors dienen.

## Patentansprüche

1. Handgeführtes Arbeitsgerät, insbesondere Heckenschere, mit zumindest zwei beabstandet voneinander angeordneten Griffeinrichtungen (2, 3) für eine beidhändige Handhabung des Arbeitsgeräts durch einen Bediener, und mit einem Motorgehäuse (4 zur Aufnahme eines Antriebsmotors, an den eine Arbeitseinrichtung (5), insbesondere eine Schneideinrichtung, ankoppelbar ist, **dadurch gekennzeichnet, dass** die Griffeinrichtungen (2, 3) starr zu einer Griffeinheit (10) verbunden sind und das Motorgehäuse (4) verschwenkbar an der Griffeinheit (10) angeordnet ist, um verschiedene Funktionsstellungen des Arbeitsgeräts zu ermöglichen.

2. Handgeführtes Arbeitsgerät nach Anspruch 1, **dadurch gekennzeichnet, dass** das Motorgehäuse (4) relativ zur Griffeinheit (2, 3) um eine Schwenkachse (6) bewegbar ist, die zumindest im Wesentlichen parallel zu einer Längsachse (12) der Arbeitseinrichtung ausgerichtet ist.

3. Handgeführtes Arbeitsgerät nach Anspruch 2, **dadurch gekennzeichnet, dass** eine Griffachse (7) oder Griffebene einer ersten Griffeinrichtung (2) zumindest im Wesentlichen orthogonal zu einer Griffachse (8) oder Griffebene einer zweiten Griffeinrichtung (3) ausgerichtet ist.

4. Handgeführtes Arbeitsgerät nach Anspruch 3, **dadurch gekennzeichnet, dass** zumindest eine Griffeinrichtung (2, 3) als zumindest im Wesentlichen geschlossener Bügelgriff ausgeführt ist.

5. Handgeführtes Arbeitsgerät nach Anspruch 3, **dadurch gekennzeichnet, dass** zumindest eine Griffeinrichtung (2, 3) als Pistolengriff ausgeführt ist.

6. Handgeführtes Arbeitsgerät nach Anspruch 1, **dadurch gekennzeichnet, dass** zumindest einer Griffeinrichtung (2, 3) eine Betätigungseinrichtung, insbesondere ein Geräteschalter, zugeordnet ist.

7. Handgeführtes Arbeitsgerät nach Anspruch 1, **dadurch gekennzeichnet, dass** an zumindest einer Griffeinrichtung (2, 3) ein Schutzschild (9), das insbesondere mit einer Betätigungseinrichtung koppelbar ist, angebracht ist.

8. Handgeführtes Arbeitsgerät nach Anspruch 1, **dadurch gekennzeichnet, dass** eine Arretierungsvorrichtung vorgesehen ist, die eine Verriegelung des Motorgehäuses (4) an der Griffeinheit (10) in zumindest einer Funktionsstellung ermöglicht.

9. Handgeführtes Arbeitsgerät nach Anspruch 1, **dadurch gekennzeichnet, dass** die Griffeinheit (10) einen insbesondere zwischen den Griffeinrichtungen (2, 3) angeordneten, im Wesentlichen zylindrisch gestalteten Abschnitt aufweist und das Motorgehäuse (4) um eine Zylinderachse (6) des zylindrischen Abschnitts verschwenkbar ist.

10. Handgeführtes Arbeitsgerät nach Anspruch 1, **dadurch gekennzeichnet, dass** eine der Arbeitseinrichtung (5) abgewandte Griffeinrichtung (2, 3) als Pistolengriff ausgeführt ist und die Griffachse (8) des Pistolengriffs die Schwenkachse (6) in einem spitzen Winkel schneidet.

11. Handgeführtes Arbeitsgerät nach Anspruch 1, **dadurch gekennzeichnet, dass** zumindest ein Griffabschnitt einer Griffeinrichtung (2, 3) um eine von der Schwenkachse (6) abweichende Bewegungsachse schwenkbar an der Griffeinheit (10) angebracht ist.

12. Handgeführtes Arbeitsgerät nach Anspruch 1, **dadurch gekennzeichnet, dass** zumindest eine Übertragungseinrichtung für eine Übertragung einer rotatorischen und/oder translatorischen Steuerungsbewegung längs der Schwenkachse (6) zur Kopplung zumindest einer Betätigungseinrichtung mit zumindest einer dem Antriebsmotor und/oder der Arbeitseinrichtung (5) zugeordneten Funktionseinrichtung vorgesehen ist.
